# EUROPEAN PATENT SPECIFICATION

(11) **EP 2 564 979 B1**
(45) Date of publication and mention of the grant of the patent: **29.05.2019**
(21) Application number: 12182035.1
(22) Date of filing: 28.08.2012
(51) Int. Cl.: B23P 6/00, F01D 5/00, F01D 25/16

(54) **Method of repairing a circumferential flanged ring of a gas turbine and bushing and circumferential flanged ring assembly of a gas turbine.**
Verfahren zum Reparieren eines Umfangsflanschringes einer Gasturbine und Buchse und Umfangsflanschringanordnung einer Gasturbine
Procédé pour réparer un anneau à bride circonférentiel d'une turbine à gaz et assemblage d'une douille et d'un anneau à bride circonférentiel d'une turbine à gaz

(30) Priority: 29.08.2011 US 201113220046
(43) Date of publication of application: 06.03.2013
(73) Proprietor: United Technologies Corporation, Farmington, CT 06032 (US)
(72) Inventor: Palmisano, Leonard Paul, Forestville, CT Connecticut 06010 (US); Bogue, William, Hebron, CT Connecticut 06248 (US); Prihar, Ron I., West Hartford, CT Connecticut 06117 (US)
(74) Representative: Dehns

(56) References cited:
- EP-A1- 2 208 569
- EP-A2- 2 113 634
- EP-A2- 2 116 691
- EP-A2- 2 208 866
- WO-A1-2011/098705
- US-A1- 2009 064 500

## Description

### BACKGROUND OF THE INVENTION

This application relates to a method of repairing a circumferential flanged ring of a gas turbine and furthermore to a bushing and circumferential flanged ring assembly of a gas turbine according to the preamble of claim 6.

Gas turbine engines include multiple sections, such as a fan section, a compressor section, a combustor section, a turbine section, and an exhaust section. Bearing compartments include bearings, etc., that rotatably support and rotatably couple the components in many of these sections. The gas turbine engine also includes several components that are a circumferential flanged ring.

One example circumferential flanged ring is a static low pressure compressor bearing support. The static low pressure compressor bearing support includes an end with a smaller circumference including a flange that is attached to a static front bearing support assembly, and an opposing end with a larger circumference including a flange that is attached to a static strut.

The circumferential flanged ring can be damaged due to cracking. This type of damage can be repaired by welding, plate welding, or plasma welding. However, welding can cause distortion. The circumferential flanged ring can also be damaged due to dimensional changes caused by creep, thermal stresses or aging. If this occurs, bolt holes in the flange could misalign with a corresponding component during assembly, making the attachment of the circumferential flanged ring to another component more difficult.

The current practice for a non-serviceable flange made of titanium, steel, cobalt or nickel is to cut off and weld a replacement forging with extra stock to allow machining of the original flange geometry. Certain types of alloys, such as aluminum and magnesium, cannot be easily processed by the welded flange replacement process and cannot be repaired by this method.

WO 2011/098705 A1 discloses a bushing and circumferential flanged ring assembly in accordance with the preamble of claim 6. Bushing assemblies are also disclosed in EP 2 208 866 A2, EP 2 208 569 A1 and EP 2 116 691 A2.

### SUMMARY OF THE INVENTION

According to a first aspect of the present invention, there is provided a method of repairing a circumferential flanged ring of a gas turbine engine as set forth in claim 1.

According to another aspect of the present invention there is a bushing and circumferential flanged ring assembly of a gas turbine engine as set forth in claim 6.

Preferred embodiments of the method and of the bushing and circumferential flanged ring assembly are presented in the dependent claims.

These and other features of the present invention can be best understood from the following specification and drawings, the following of which is a brief description.

### BRIEF DESCRIPTION OF THE DRAWINGS

Figure 1 illustrates a simplified cross-sectional view of a standard gas turbine engine;
Figure 2 illustrates a cross-sectional view of a portion of a circumferential flanged ring;
Figure 3 illustrates a cross-sectional view of a portion of a circumferential flange of the circumferential flanged ring including a damaged portion;
Figure 4 illustrates a cross-sectional view of a portion of the flange of the circumferential flanged ring after machining to remove the damaged portion;
Figure 5 illustrates a cross-sectional view of a portion of a circumferential bushing employed to repair the circumferential flanged ring;
Figure 6 illustrates a cross-sectional view of the bushing positioned on the circumferential flanged ring;
Figure 7 illustrates a cross-sectional view of the bushing positioned on the circumferential flanged ring including a longer tab; and
Figure 8 illustrates a end view of a circumferential ring assembly formed of several segments;
Figure 9 illustrates one example of a joint between adjacent segments of the circumferential ring assembly formed of several segments;
Figure 10 illustrates another example of a joint between adjacent segments of the circumferential ring assembly;
Figure 11 illustrates a schematic circumferential ring assembly including two bushings at opposing ends to provide hoop strength:
Figure 12 illustrates a circumferential ring assembly with a flanged bushing at opposing ends of the circumferential ring; and
Figure 13 illustrates a circumferential flanged ring assembly with a flanged bushing at opposing ends of the circumferential ring.

### DETAILED DESCRIPTION OF THE PREFERRED EMBODIMENT

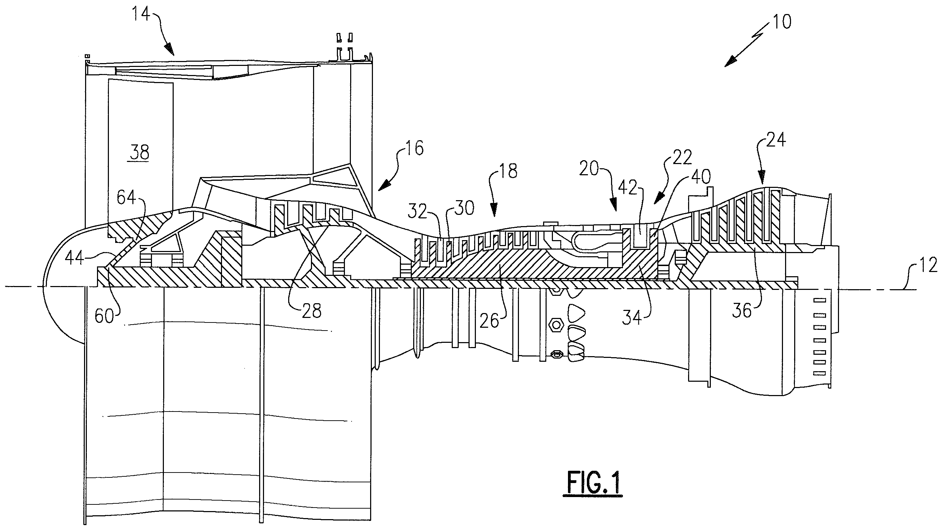

Figure 1 illustrates a gas turbine engine 10 that is circumferentially disposed about an axis 12. The gas turbine engine 10 includes a fan section 14, a low-pressure compressor section 16, a high-pressure compressor section 18, a combustion section 20, a high-pressure turbine section 22, and a low-pressure turbine section 24.

During operation, air is compressed in the low-pressure compressor section 16 and the high-pressure compressor section 18. The compressed air is then mixed with fuel and burned in the combustion section 20. The products of combustion are expanded across the high-pressure turbine section 22 and the low-pressure turbine section 24.

The high-pressure compressor section 18 and the low-pressure compressor section 16 include rotors 26 and 28, respectively. The rotors 26 and 28 are configured to rotate about the axis 12, driving the compressors 16 and 18. The compressors 16 and 18 include alternating rows of rotating compressor blades 30 and static airfoils or vanes 32.

The high-pressure turbine section 22 includes a rotor 34 that is rotatably coupled to the rotor 26, and the low-pressure turbine section 24 includes a rotor 36 that is rotatably coupled to the rotor 28. The rotors 34 and 36 are configured to rotate about the axis 12 in response to expansion. When rotated, the rotors 34 and 36 drive the high-pressure compressor section 18 and the low-pressure compressor section 16. The rotor 36 also rotatably drives a fan 38 of the fan section 14. The turbines 22 and 24 include alternating rows of rotating airfoils or turbine blades 40 and static airfoils or vanes 42.

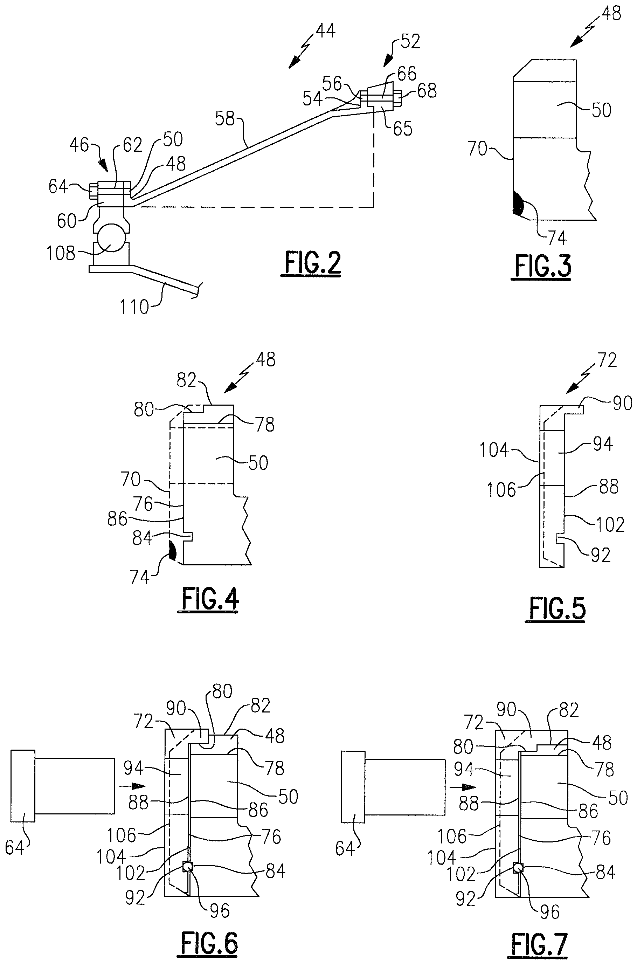

As shown in Figure 2, the gas turbine engine 10 includes a circumferential flanged ring 44. The circumferential flanged ring 44 can be any component of the gas turbine engine 10 that is a bearing support, a case, or a flanged ring that has adequate space or clearance on at least one side to allow for the connection and engagement of a bushing 72, as described below. The combination of the bushing 72 and the circumferential flanged ring 44 support the structural requirements of the original undamaged circumferential flanged ring 44.

The circumferential flanged ring 44 can have the shape of a truncated cone, a cylinder, or be frustoconical in shape (although only a cross-section of a portion of the circumferential flanged ring 44 is shown). In the example show, the circumferential flanged ring 44 has the shape of a truncated cone. The circumferential flanged ring 44 is static. In one example, a first end 46 of the circumferential flanged ring 44 includes a flange 48 having a plurality of bolt holes 50. The flange 48 is circumferential in shape, and the plurality of bolt holes 50 are arranged in a circular pattern. An opposing second end 52 of the circumferential flanged ring 44 includes another flange 54 (also circumferential in shape) that includes a plurality of bolt holes 56, and the plurality of bolt holes 56 are also arranged in a circular pattern. The flange 48 has a smaller diameter than the diameter of the another flange 54. A body portion 58 having the shape of truncated cone is defined between the flange 48 and the another flange 54.

The flange 48 is connected to a static assembly 60 (shown schematically in Figures 1 and 2) that includes a plurality of bolt holes 62 that each align with one of the plurality of bolt holes 50, and a bolt 64 is received in each set of the aligned bolt holes 50 and 62. The second end 52 is connected to another static assembly 65 (shown schematically in Figures 1 and 2) including a plurality of bolt holes 66 that each align with one of the plurality of bolt holes 56, and a bolt 68 is received in each set of the aligned bolt holes 56 and 66.

In the example shown in Figure 2, the circumferential flanged ring 44 is a low pressure compressor bearing support. The static assembly 60 is a static front bearing support assembly, and the another static assembly 65 is a static strut. The static front bearing support assembly supports a rotating bearing 108 associated with a rotating shaft 110 of the gas turbine engine 10. Although Figure 2 illustrates the circumferential flanged ring 44 as a low pressure compressor bearing support, the circumferential flanged ring 44 can be any component of the gas turbine engine 10 that is a bearing support, a case, or a flanged ring that has adequate space on at least one side to allow for the connection of a bushing 72, as described below.

Figure 3 shows a cross-sectional view of a portion of the flange 48. Portions of the flange 48 are prone to damage. An outer surface of the flange 48 defines an original outer profile 70. A bushing 72 that is circumferential in shape (a cross-section of a portion of the bushing 72 is shown in Figure 5) is employed to repair a damaged area 74 of the flange 48. In one example, the flange 48 can crack (which is likely to occur on an inner portion of the flange 48), for example from handling damage, and the axial planes need to be restored. In another example, an area of the flange 48 needs to be dimensionally restored (which is likely to occur on a face of the flange 48) because of dimensional changes due to creep caused by thermal stresses and/or aging.

Figure 4 illustrates a cross-sectional view of a portion of the flange 48 after machining. The original outer profile 70 of the flange 48 is shown in dashed lines. The flange 48 is machined to remove the damaged area 74 or any area that needs to be dimensionally restored to define a new outer profile 76, shown in solid lines.

In one example, the flange 48 is also milled or machined to radially elongate the bolt holes 50 such that each bolt hole 50 has an oval shape and defines a new bolt hole profile 78. In one example, at least one recess 80 is formed on a top surface 82 of the flange 48. In one example, a seal groove 84 can be formed on an outer surface 86 of the flange 48. In one example, the recess 80 and the groove 84 are machined.

Figure 5 illustrates the bushing 72 that is to be attached to the new outer profile 76 of the flange 48. In one example, the bushing 72 is machined. The outer profile 104 of the bushing 72 is shown in solid lines. In one example, the bushing 72 is made of the same material as the circumferential flanged ring 44, including the flange 48. For example, both the bushing 72 and the circumferential flanged ring 44 are made of an aluminum alloy or a magnesium alloy. The bushing 72 and the circumferential flanged ring 44 can also be made of low alloy steel, titanium, nickel, or any other material. The bushing 72 and the circumferential flanged ring 44 can also be made from different materials. The matching of thermal expansion must be managed if an alternate material is selected for strength, corrosion resistance or any other reason. The bushing 72 is machined such that an inner profile 88 of the bushing 72 matches and corresponds to the new outer profile 76 of the flange 48.

In one embodiment, the bushing 72 includes at least one tab 90 that corresponds in size, shape and location to the at least one recess 80 of the flange 48. The at least one recess 80 and the at least one tab 90 lock the bushing 72 to the flange 48 for the purpose of resisting rotational motion between the bushing 72 and flange 48. The bushing 72 and the flange 48 can include a plurality of tabs 90 and a plurality of recesses 80, respectively. The number of recesses 80 equals the number of tabs 90, and the recesses 80 and the tabs 90 are located to align with each other when the bushing 72 is positioned on the flange 48. In one example, there are two recesses 80 and two tabs 90.

A seal groove 92 that corresponds in axial and radial placement and size to the seal groove 84 of the flange 48 can also formed on an inner surface 102 of the bushing 72. In one example, the seal groove 84 is machined.

The bushing 72 includes a plurality of bolt holes 94 that each align with one of the plurality of bolt holes 50 of the flange 48 (which can now have the new bolt hole profile 78) when the bushing 72 is assembled on the flange 48. In one example, the bolt holes 94 are circular. Each of the plurality of bolt holes 94 have a diameter equal to the original diameter of each of the plurality of bolt holes 50 prior to being radially elongated to have the new bolt hole profile 78. The bushing 72 will locate the bolt holes 50 radially. Both the flange 48 and bushing 72 will concurrently locate the holes 50 and 94 circumferentially.

As shown in Figure 6, the bushing 72 is then positioned on the flange 48 of the circumferential flanged ring 44. If the bushing 72 and the circumferential flanged ring 44 includes the at least one tab 90 and the at least one recess 80, respectively, the at least one tab 90 of the bushing 72 is received in the at least one recess 80 of the flange 48 and increases the hoop stiffness of the bushing 72 relative to the flange 48 and provides clocking. An outer diameter defined by the at least one tab 90 is greater than an outer diameter defined by a remainder of the bushing 72 to provide the hoop stiffness. An outer diameter defined by the at least one recess 80 of the flange 48 is slightly larger than an inner diameter defined by the at least one tab 90 of the bushing 72, creating a tight interference that retains the flange 48 and the bushing 72 together in this embodiment. The new outer profile 76 of the flange 48 contacts the inner profile 88 of the bushing 72 as the profiles 76 and 88 have been machined to match each other.

If the flange 48 and the bushing 72 include seal grooves 84 and 92, respectively, a seal 96, for example an o-ring, is located in the aligned seal grooves 84 and 92. The seal 96 prevents the bypass of oil and/or air. As bushing 72 is much larger in size than traditional bushings, there is room for installing the seal 96 between the flange 48 and the bushing 72 to prevent fluid or air leakage.

Again, as the bushing 72 is much larger in size than traditional bushings, there is room for a sealing compound at the interface between the flange 48 and bushing 72. In another example, instead of seal grooves 84 and 92, the bushing 72 and the flange 48 can be coated with a fluoroelastomer sealant to prevent the bypass of oil and/or air. Alternately, instead of seal grooves 84 and 92, an adhesive agent or anaerobic sealing compound can be employed to bond the bushing 72 and the flange 48 to prevent the bypass of oil and/or air. In one example, the adhesive agent is Loctite ®, a registered trademark of Henkel Corporation of Rocky Hill, Connecticut. The bushing 72 and the flange 48 are then clamped together until the fluoroelastomer sealant or the adhesive agent are cured.

Once assembled, the engagement of the at least one tab 90 of the bushing 72 in the at least one recess 80 of the flange 48 provide a strong attachment between the bushing 72 and the flange 48. In one example, the outer profile 104 of the bushing 72 can be machined to correspond to the original outer profile 70 of the flange 48 and have a new outer profile 106 that matches the original outer profile 70 of the flange 48. The at least one tab 90 and the bonding material, if any, retain the bushing 72 to the flange 48 of the circumferential flanged ring 44 to prevent separation during assembly and use. By employing the bushing 72, the hoop stiffness is increased.

Each of plurality of bolt holes 94 of the bushing 72 are aligned with one of the plurality of bolt holes 50 (in one example, the plurality of bolt holes 50 have the new bolt hole profile 78) of the flange 48. The bolt 64 is received in each of the aligned bolt holes 50 and 94 (as well as the bolt hole 62 of the static assembly 60). In the example where the bolt holes 50 are slightly radially elongated, this allows for an easier assembly and installation of the bolts 64 due to the additional clearance 100 created by the radially elongated bolt holes 50 having the new bolt hole profile 78. Once assembled, the secured parts together carry load in all directions, except for the direction in which the plurality of bolt holes 50 are radially elongated.

In another example, the bushing 72 can be attached to an inner diameter of the flange 48. In this example, there is clearance for the bushing 72 inside the inner diameter of the circumferential flanged ring 44.

In another example shown in Figure 7, the at least one tab 90 of the bushing 72 has a length that covers an outer diameter of the flange 48. This additional length provides the bushing 72 with anti-rotational features relative to the flange 48.

In another example, the circumferential flanged ring 44 and the bushing 72 do not include the at least one recess 80 and the at least one tab 90, respectively. In this example, the circumferential flanged ring 44 and the bushing 72 are aligned by the bolts 64 received in the bolt holes 50 and 94 of the circumferential flanged ring 44 and the bushing 72, respectively.

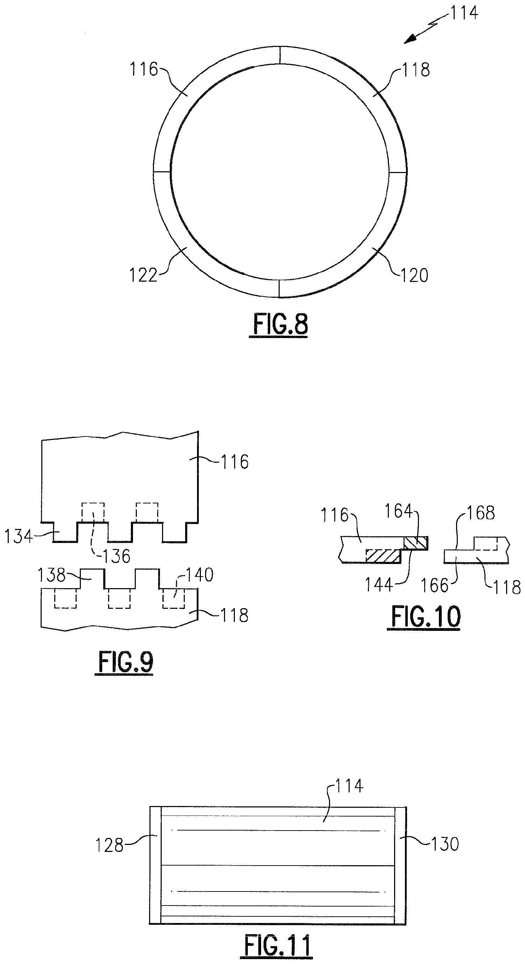

In another example not forming part of the present invention, as shown in Figure 8, a circumferential ring assembly 114 has a shape that is not possible to achieve by casting in a single process. Therefore, individual separate segments 116, 118, 120 and 122 are cast and assembled together to form the circumferential ring assembly 114. Although four separate segments 116, 118, 120 and 122 are illustrated and shown, the circumferential ring assembly 114 can include any number of separate segments.

As shown in Figures 9 and 10, the separate segments 116, 118, 120 and 122 are secured together by interlocking overlapping joints. In one example shown in Figure 9, one segment 116 includes a plurality of protrusions 134 and a plurality of recesses 136 that extend within the material of the segment 116. The other segment 118 includes a plurality of protrusions 138 each located to be received in one of the plurality of recesses 136 and a plurality of recesses 140 each located to receive one of the plurality of protrusions 134. The protrusions 134 and 138 are each received in one of the recesses 140 and 136, respectively, to retain the segments 116 and 118 together. The other segments 120 and 122 are retained in a similar manner.

In another example, not forming part of the present invention, shown in Figure 10, the segment 116 includes a projection 164 and a recess 144, and the segment 118 includes a projection 166 and a recess 168. The projection 164 of the segment 116 is received in the recess 168 of the segment 118, and the projection 166 of the segment is received in the recess 144 of the segment 118. The other segments 120 and 122 are retained in a similar manner.

Although the assembly of the segments 116, 118, 120 and 122 creates a circumferential ring assembly 114, the interlocking joints do not provide stiffness, and the segments 116, 118, 120 and 122 can wobble. As shown schematically in Figure 11, circumferential bushings 128 and 130 are be added to both the ends of the circumferential ring assembly 114 to provide hoop stiffness and strength to the plurality of separate segments 116, 118, 120 and 122 that are assembled to form the circumferential ring assembly 114. A flange of each of the circumferential ring assembly 114 and the circumferential bushings 128 and 130 are machined and assembled as described above and push outward against the circumferential ring assembly 114.

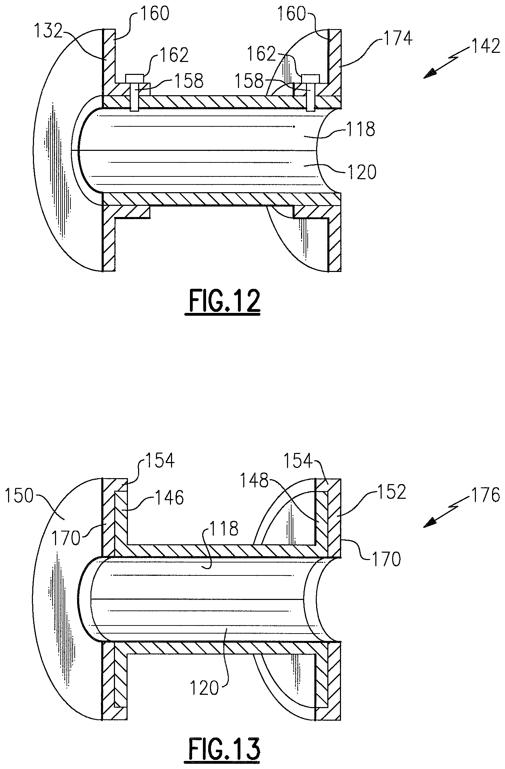

Figure 12 illustrates an example segmental circumferential ring assembly 142, not forming part of the present invention. 142. Circumferential bushings 132 and 174 have a substantial L-cross section including a portion 158 the contacts the circumferential ring assembly 142 and a substantially perpendicular flange 160 (shown in cross-section). The portion 158 of each of the circumferential bushings 132 and 174 are attached at the ends of the circumferential ring assembly 142. In one example, the circumferential bushings 132 and 174 are secured by an interference fit with the circumferential ring assembly 142. Additionally, fasteners 162, for example bolts, can be used to attach the portion 158 to the circumferential ring assembly 142.

Figure 13 illustrates another example segmental circumferential ring assembly 176, not forming part of the present invention, including a circumferential flange 146 and 148 at each of the opposing ends of the circumferential ring assembly 176. A circumferential bushing 150 and 152 (shown in cross-section) is attached to each of the circumferential flanges 146 and 148, respectively, and each have a substantial L-cross section. Each circumferential bushing 150 and 152 includes a portion 154 that contacts the outermost portion of the circumferential flanges 146 and 148 and a perpendicular portion 170 flush and parallel with the circumferential flanges 146 and 148. In one example, the circumferential bushings 150 and 152 are secured by an interference fit with the flanges 146 and 148, respectively, of the circumferential ring assembly 176.

The foregoing description is only exemplary of the principles of the invention. Many modifications and variations are possible in light of the above teachings. It is, therefore, to be understood that within the scope of the appended claims, the invention may be practiced otherwise than using the example embodiments which have been specifically described. For that reason the following claims should be studied to determine the true scope and content of this invention.

## Claims

1. A method of repairing a circumferential flanged ring (44) of a gas turbine engine (10), the method comprising the steps of:
removing a damaged portion (74) from a flange (48) of a circumferential flanged ring (44) having an original profile (70) to define a new profile (76);
removing a portion of a circumferential bushing (72) to define a bushing profile (88) that matches the new profile (76) of the flange (48); and
attaching the bushing (72) to the flange (48) of the circumferential flange ring (44).

2. The method as recited in claim 1 including the step of sealing the flange (48) of the circumferential flanged ring (44) relative to the bushing (72).

3. The method as recited in claim 1 or 2 wherein the circumferential flanged ring (44) includes a first circumferential flange (48) having a plurality of flange holes (50).

4. The method as recited in claim 3 including the steps of forming a plurality of bushing holes (94) having a circular shape in the bushing (72), forming the plurality of flange holes (50) to have an oval shape, aligning each of the plurality of bushing holes (94) with one of the plurality of flange holes (50), and inserting a fastener (64) into the aligned holes (50,94).

5. The method as recited in any preceding claim including the steps of forming at least one recess (80) on a top circumferential surface of the flange (48), forming at least one tab (90) on the bushing (72), and locating the at least one tab (90) in the at least one recess (80) to secure the bushing (72) to the flange (48) by an interference fit.

6. A bushing and circumferential flanged ring assembly of a gas turbine engine, the bushing and circumferential flanged ring assembly comprising:
a circumferential flanged ring (44) including a flange (48) having an original profile (70), wherein a portion (74) is removed to define a new profile (76); and
a bushing (72) having bushing profile (88) that matches the new profile (76) of the flange (48), wherein the flange (48) and the bushing are attached, **characterised in that**:
at least one recess (80) is formed on a top circumferential surface of the flange (48) of the circumferential flanged ring (44), and the bushing (72) includes at least one tab (90), and the at least one tab (90) is received in the at least one recess (80) to secure the bushing (72) and the circumferential flanged ring (44) by an interference fit.

7. The bushing and circumferential flanged ring assembly as recited in claim 6 wherein the circumferential flanged ring (44) is a bearing support of a gas turbine engine.

8. The bushing and circumferential flanged ring assembly as recited in claim 6 or 7 wherein the circumferential flanged ring (44) includes a first circumferential flange (48) having a plurality of flange holes (50).

9. The bushing and circumferential flanged ring assembly as recited in claim 8, wherein the bushing (72) includes a plurality of bushing holes (94) having a circular shape, the plurality of flange holes (50) of the flange (48) have an oval shape, and each of the plurality of bushing holes (94) align with one of the plurality of flange holes (50) to receive a fastener (64).

10. The bushing and circumferential flanged ring assembly as recited in any of claims 6 to 9 wherein the bushing (72) and the circumferential flanged ring (44) are made of the same material.

11. The bushing and circumferential flanged ring assembly as recited in any of claims 6 to 10 wherein a first circumferential seal groove (84) is formed on an outer surface of the new outer profile (76) of the flange (48), a second circumferential seal groove (92) is formed on an inner surface of the inner profile (88) of the bushing (72), and the first circumferential seal groove (84) and the second circumferential seal groove (92) align to receive a sealing member (96).

12. The bushing and circumferential flanged ring assembly as recited in any of claims 6 to 10 wherein one of a fluoroelastomer sealant and an adhesive agent is employed to seal the bushing (72) relative to the circumferential flanged ring (44).

13. The bushing and circumferential flanged ring assembly as recited in any of claims 6 to 12 wherein the bushing (72) and the circumferential flanged ring (44) are made of an aluminum alloy or a magnesium alloy.

14. The bushing and circumferential flanged ring assembly as recited in any of claims 6 to 13 wherein at least one recess is formed on an inner circumferential surface of the flange (48) of the circumferential flanged ring (44), and the bushing (72) includes at least one tab, and the at least one tab is received in the at least one recess to secure the bushing (72) and the circumferential flanged ring by an interference fit.

## Patentansprüche

1. Verfahren zum Reparieren eines Umfangsflanschrings (44) eines Gasturbinentriebwerks (10), wobei das Verfahren die folgenden Schritte umfasst:
Entfernen eines beschädigten Abschnitts (74) von einem Flansch (48) eines Umfangsflanschrings (44), der ein ursprüngliches Profil (70) aufweist, um ein neues Profil (76) zu definieren;
Entfernen eines Abschnitts einer Umfangsbuchse (72), um ein Buchsenprofil (88) zu definieren, das dem neuen Profil (76) des Flanschs (48) entspricht; und
Anbringen der Buchse (72) an dem Flansch (48) des Umfangsflanschrings (44).

2. Verfahren nach Anspruch 1, das den Schritt des Abdichtens des Flanschs (48) des Umfangsflanschrings (44) relativ zu der Buchse (72) einschließt.

3. Verfahren nach Anspruch 1 oder 2, wobei der Umfangsflanschring (44) einen ersten Umfangsflansch (48) einschließt, der eine Vielzahl von Flanschlöchern (50) aufweist.

4. Verfahren nach Anspruch 3, einschließend die Schritte des Bildens einer Vielzahl von Buchsenlöchern (94), die eine Kreisform aufweisen, in der Buchse (72), des Bildens der Vielzahl von Flanschlöchern (50) dazu, eine ovale Form aufzuweisen, des Ausrichtens von jedem der Vielzahl von Buchsenlöchern (94) mit einem der Vielzahl von Flanschlöchern (50) und des Einführens einer Befestigungsvorrichtung (64) in die ausgerichteten Löcher (50, 94).

5. Verfahren nach einem der vorhergehenden Ansprüche, einschließend die Schritte des Bildens von mindestens einer Vertiefung (80) auf einer Umfangsoberseite des Flanschs (48), des Bildens von mindestens einem Vorsprung (90) an der Buchse (72) und des Positionierens des mindestens einen Vorsprungs (90) in der mindestens einen Vertiefung (80), um die Buchse (72) durch eine Presspassung an dem Flansch (48) zu sichern.

6. Buchse-Umfangsflanschring-Anordnung eines Gasturbinentriebwerks, wobei die Buchse-Umfangsflanschring-Anordnung Folgendes umfasst:
einen Umfangsflanschring (44), der einen Flansch (48) einschließt, der ein ursprüngliches Profil (70) aufweist, wobei ein Abschnitt (74) entfernt wird, um ein neues Profil (76) zu definieren; und
eine Buchse (72), die ein Buchsenprofil (88) aufweist, das dem neuen Profil (76) des Flanschs (48) entspricht, wobei der Flansch (48) und die Buchse aneinander angebracht sind, **dadurch gekennzeichnet, dass**:
mindestens eine Vertiefung (80) auf einer Umfangsoberseite des Flanschs (48) des Umfangsflanschrings (44) gebildet ist und die Buchse (72) mindestens einen Vorsprung (90) einschließt und der mindestens eine Vorsprung (90) in der mindestens einen Vertiefung (80) aufgenommen ist, um die Buchse (72) und den Umfangsflanschring (44) durch eine Presspassung zu sichern.

7. Buchse-Umfangsflanschring-Anordnung nach Anspruch 6, wobei der Umfangsflanschring (44) ein Lagerträger eines Gasturbinentriebwerks ist.

8. Buchse-Umfangsflanschring-Anordnung nach Anspruch 6 oder 7, wobei der Umfangsflanschring (44) einen ersten Umfangsflansch (48) einschließt, der eine Vielzahl von Flanschlöchern (50) aufweist.

9. Buchse-Umfangsflanschring-Anordnung nach Anspruch 8, wobei die Buchse (72) eine Vielzahl von Buchsenlöchern (94), die eine Kreisform aufweisen, einschließt, die Vielzahl von Flanschlöchern (50) des Flanschs (48) eine ovale Form aufweisen und jedes der Vielzahl von Buchsenlöchern (94) sich mit einem der Vielzahl von Flanschlöchern (50) ausrichtet, um eine Befestigungsvorrichtung (64) aufzunehmen.

10. Buchse-Umfangsflanschring-Anordnung nach einem der Ansprüche 6 bis 9, wobei die Buchse (72) und der Umfangsflanschring (44) aus demselben Material hergestellt sind.

11. Buchse-Umfangsflanschring-Anordnung nach einem der Ansprüche 6 bis 10, wobei eine erste Umfangsdichtungsnut (84) auf einer Außenfläche des neuen Außenprofils (76) des Flanschs (48) gebildet ist, eine zweite Umfangsdichtungsnut (92) auf einer Innenfläche des Innenprofils (88) der Buchse (72) gebildet ist und die erste Umfangsdichtungsnut (84) und die zweite Umfangsdichtungsnut (92) sich miteinander ausrichten, um ein Dichtungselement (96) aufzunehmen.

12. Buchse-Umfangsflanschring-Anordnung nach einem der Ansprüche 6 bis 10, wobei eines von einem Fluorelastomerdichtmittel und einem Klebstoff eingesetzt wird, um die Buchse (72) relativ zu dem Umfangsflanschring (44) abzudichten.

13. Buchse-Umfangsflanschring-Anordnung nach einem der Ansprüche 6 bis 12, wobei die Buchse (72) und der Umfangsflanschring (44) aus einer Aluminiumlegierung oder einer Magnesiumlegierung hergestellt sind.

14. Buchse-Umfangsflanschring-Anordnung nach einem der Ansprüche 6 bis 13, wobei mindestens eine Vertiefung auf einer Umfangsinnenfläche des Flanschs (48) des Umfangsflanschrings (44) gebildet ist und die Buchse (72) mindestens einen Vorsprung einschließt und der mindestens eine Vorsprung in der mindestens einen Vertiefung aufgenommen ist, um die Buchse und den Umfangsflanschring durch eine Presspassung zu sichern.

## Revendications

1. Procédé de réparation d'un anneau à bride circonférentielle (44) d'une turbine à gaz (10), le procédé comprenant les étapes de :
l'élimination d'une partie endommagée (74) à partir d'une bride (48) d'un anneau à bride circonférentielle (44) ayant un profil d'origine (70) pour définir un nouveau profil (76) ;
l'élimination d'une partie d'une douille circonférentielle (72) pour définir un profil de douille (88) qui correspond au nouveau profil (76) de la bride (48) ; et
la fixation de la douille (72) à la bride (48) de l'anneau à bride circonférentielle (44).

2. Procédé selon la revendication 1, comprenant l'étape du scellement de la bride (48) de l'anneau à bride circonférentielle (44) par rapport à la douille (72).

3. Procédé selon la revendication 1 ou 2, dans lequel l'anneau à bride circonférentielle (44) comprend une première bride circonférentielle (48) ayant une pluralité de trous de bride (50).

4. Procédé selon la revendication 3, comprenant les étapes de la formation d'une pluralité de trous de douille (94) ayant une forme circonférentielle dans la douille (72), la formation de la pluralité de trous de bride (50) de sorte à ce qu'ils aient une forme ovale, l'alignement de chacun de la pluralité de trous de douille (94) avec l'un de la pluralité de trous de bride (50), et l'insertion d'un élément de fixation (64) dans les trous alignés (50, 94).

5. Procédé selon une quelconque revendication précédente, comprenant les étapes de la formation d'au moins un évidemment (80) sur une surface circonférentielle supérieure de la bride (48), la formation d'au moins une patte (90) sur la douille (72), et le positionnement de l'au moins une patte (90) dans l'au moins un évidemment (80) pour fixer la douille (72) à la bride (48) par un ajustement avec serrage.

6. Assemblage d'une douille et d'un anneau à bride circonférentielle d'une turbine à gaz, l'assemblage d'une douille et d'un anneau à bride circonférentielle comprenant :
un anneau à bride circonférentielle (44) comprenant une bride (48) ayant un profil d'origine (70), dans lequel une partie (74) est éliminée pour définir un nouveau profil (76) ; et
une douille (72) ayant un profil de douille (88) qui correspond au nouveau profil (76) de la bride (48), dans lequel la bride (48) et la douille sont fixées, **caractérisé en ce que** :
au moins un évidemment (80) est formé sur une surface circonférentielle supérieure de la bride (48) de l'anneau à bride circonférentielle (44), et la douille (72) comprend au moins une patte (90), et l'au moins une patte (90) est reçue dans l'au moins un évidemment (80) pour fixer la douille (72) et l'anneau à bride circonférentielle (44) par un ajustement avec serrage.

7. Assemblage d'une douille et d'un anneau à bride circonférentielle selon la revendication 6, dans lequel l'anneau à bride circonférentielle (44) est un support de palier d'une turbine à gaz.

8. Assemblage d'une douille et d'un anneau à bride circonférentielle selon la revendication 6 ou 7, dans lequel l'anneau à bride circonférentielle (44) comprend une première bride circonférentielle (48) ayant une pluralité de trous de bride (50).

9. Assemblage d'une douille et d'un anneau à bride circonférentielle selon la revendication 8, dans lequel la douille (72) comprend une pluralités de trous de douille (94) ayant une forme circulaire, la pluralité de trous de bride (50) de la bride (48) ont une forme ovale, et chacun de la pluralité de trous de douille (94) s'aligne avec l'un de la pluralité de trous de bride (50) pour recevoir un élément de fixation (64).

10. Assemblage d'une douille et d'un anneau à bride circonférentielle selon l'une quelconque des revendications 6 à 9, dans lequel la douille (72) et l'anneau à bride circonférentielle (44) sont faits du même matériau.

11. Assemblage d'une douille et d'un anneau à bride circonférentielle selon l'une quelconque des revendications 6 à 10, dans lequel une première rainure de joint circonférentielle (84) est formée sur une surface externe du nouveau profil externe (76) de la bride (48), une seconde rainure de joint circonférentielle (92) est formée sur une surface interne du profil interne (88) de la douille (72), et la première rainure de joint circonférentielle (84) et la seconde rainure de joint circonférentielle (92) s'alignent pour recevoir un élément d'étanchéité (96).

12. Assemblage d'une douille et d'un anneau à bride circonférentielle selon l'une quelconque des revendications 6 à 10, dans lequel l'un d'un matériau d'étanchéité à base de fluoroélastomère et d'un agent adhésif est employé pour sceller la douille (72) par rapport à l'anneau à bride circonférentielle (44).

13. Assemblage d'une douille et d'un anneau à bride circonférentielle selon l'une quelconque des revendications 6 à 12, dans lequel la douille (72) et l'anneau à bride circonférentielle (44) sont faits d'un alliage d'aluminium ou d'un alliage de magnésium.

14. Assemblage d'une douille et d'un anneau à bride circonférentielle selon l'une quelconque des revendications 6 à 13, dans lequel au moins un évidemment est formé sur une surface circonférentielle interne de la bride (48) de l'anneau à bride circonférentielle (44), et la douille (72) comprend au moins une patte, l'au moins une patte est reçue dans l'au moins un évidemment pour fixer la douille et l'anneau à bride circonférentielle par un ajustement avec serrage.
